# EUROPÄISCHE PATENTSCHRIFT

(11) **EP 3 372 869 B1**
(45) Veröffentlichungstag und Bekanntmachung des Hinweises auf die Patenterteilung: **01.12.2021**
(21) Anmeldenummer: 17159613.3
(22) Anmeldetag: 07.03.2017
(51) Int. Cl.: F16H 25/18

(54) **STELLANTRIEB**
ACTUATOR
MÉCANISME DE COMMANDE

(43) Veröffentlichungstag der Anmeldung: 12.09.2018
(73) Patentinhaber: Georg Fischer JRG AG, 4450 Sissach (CH)
(72) Erfinder: Bürli, Stephan, 4402 Frenkendorf (CH); Cachot, Philippe, 4450 Sissach (CH); Wespisser, Frederic, 68640 Muespach (FR)
(74) Vertreter: Fenner, Seraina

(56) Entgegenhaltungen:
- EP-A1- 2 816 254
- EP-A2- 2 169 268
- WO-A1-2005/021954
- DE-A1-102015 218 522

## Beschreibung

Die Erfindung betrifft einen Stellantrieb nach dem Oberbegriff des Patentanspruchs 1.

Es sind Stellantriebe bekannt, beispielsweise für die Betätigung von Ventilen, bei denen ein Stellglied mit einer Gewindespindel verbunden ist, die mit einer Spindelmutter zusammenwirkt. Dabei muss zur Verstellung des Stellglieds entweder die Gewindespindel oder die Spindelmutter gegen Verdrehung gesichert sein. Bei Ausführungsarten mit einer drehbaren Spindelmutter ist die Verdrehsicherung der Spindel axial vor oder hinter der Spindelmutter angeordnet, was die Baulänge des Stellantriebs erhöht. Es sind auch Ausführungsarten mit einem Kugelumlaufspindelantrieb bekannt, beispielsweise aus den Dokumenten DE102007037995B4 und DE102005028584B4. Ein gemeinsamer Nachteil aller Gewindeantriebe besteht darin, dass in der Regel zur Ausführung des maximal möglichen Stellhubs mehrere Umdrehungen der Gewindespindel oder Spindelmutter notwendig sind, wodurch die Geschwindigkeit der Stellbewegung begrenzt ist. Ausserdem ist der Stellhub immer linear proportional zur Drehbewegung der Spindelmutter oder Gewindespindel.Die EP 2 169 268 A2 offenbart eine Stellvorrichtung, die ein mehteiliges Gehäuse zur gewährleitung der Montage aufweist.

Ausgehend von diesem Stand der Technik liegt der Erfindung die Aufgabe zugrunde, einen Stellantrieb vorzuschlagen, der eine kurze Baulänge erlaubt, mit verhältnismässig kleinem Drehwinkel des Antriebsglieds einen maximalen Stellhub erlaubt und Stellbewegungen ermöglicht, die nicht linear proportional zum Drehwinkel des Antriebsglieds sind.

Diese Aufgabe wird erfindungsgemäss durch die im kennzeichnenden Teil des Patentanspruchs 1 angegebenen Merkmale gelöst.

Durch den die Nut durchdringenden Ansatz, der ausserhalb des Antriebsgliedes in eine gehäusefeste Axialnut greift, ist sowohl die kinematische Verbindung zwischen Antriebsglied und Stellglied als auch gleichzeitig die Verdrehsicherung des Stellgliedes im Gehäuse gewährleistet. Die steigende Nut ermöglicht Ausführungsarten, bei denen die Stellbewegungen nicht linear proportional zum Drehwinkel des Antriebsglieds sind.

Ausführungsbeispiele der Erfindung werden nachstehend unter Bezugnahme auf die angefügten Zeichnungen 4 bis 6 und 10 bis 14 erläutert. Es zeigen
- Figur 1: einen Längsschnitt durch ein Ausführungsbeispiel des Stellantriebs;
- Figur 2: einen Längsschnitt entlang der Linie II - II in Figur 1;
- Figur 3: eine perspektivische Explosionsansicht des Ausführungsbeispiels;
- Figur 4: einen Längsschnitt durch ein Ausführungsbeispiel des erfindungsgemässen Stellantriebs;
- Figur 5: einen Längsschnitt entlang der Linie V - V in Figur 4;
- Figur 6: eine perspektivische Explosionsansicht des Ausführungsbeispiels und
- Figuren 7 bis 14: als schematische Abwicklungen dargestellte Varianten der steigenden Nut.

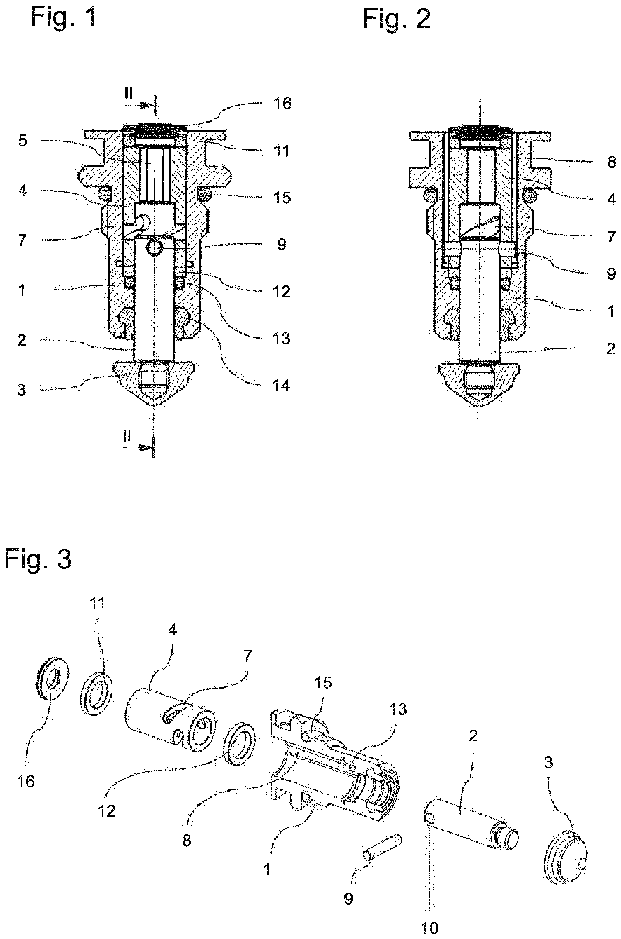

In den Figuren 1 bis 3 ist ein Ausführungsbeispiel eines Stellantriebs dargestellt. Dieses Ausführungsbeispiel gehört nicht zur Erfindung und dient nur einem besseren Verständnis. Dieser Stellantrieb ist für die Betätigung eines Ventils vorgesehen und deshalb mit verschiedenen Dichtungen 13, 14 und 15 ausgestattet, die aber nicht erfindungswesentlich sind. In einem Gehäuse 1 ist ein Stellglied in Form eines Stössels 2 axial beweglich und gegen Verdrehung gesichert angeordnet. Am Ende des Stössels 2 ist beispielhaft ein Ventilkegel 3 angeordnet. Auf einem Teil seiner Länge ist der Stössel 2 von einem drehbaren Antriebsglied in Form einer Steuerhülse 4 umgeben. Drehbewegungen, die beispielsweise durch einen Motor oder ein Handrad erzeugt werden, sind durch eine nicht dargestellte, in die Steuerhülse 4 eingreifende Welle auf die Steuerhülse 4 übertragbar. Zur formschlüssigen Verbindung mit dieser Welle ist in der Steuerhülse 4 eine Fläche 5 angeordnet.

In der Steuerhülse sind zwei steigende Nuten 7 angeordnet, in die ein Stift 9 eingreift, der in einer im Stössel 2 rechtwinklig zu seiner Längsachse angeordneten Bohrung 10 aufgenommen ist und beidseitig aus dieser herausragt. Für die Funktion des Stellantriebs würde prinzipiell ein nur einseitig vom Stössel 2 abragender Stift oder stiftähnlicher Ansatz genügen. Die Querschnittsform des Stifts 9 muss nicht zwingend wie dargestellt kreisförmig sein, sondern kann auch eine andere Form aufweisen. Beispielsweise kann der Stift 9 in den die Nut 7 kontaktierenden Bereichen abgeflacht sein, um die Flächenpressung in der Nut 7 zu reduzieren. Die Nut 7 durchdringt die Wand der Steuerhülse 4 und der Stift 9 ragt über deren äussere Mantelfläche hinaus in eine im Gehäuse 1 vorhandene Axialnut 8. Damit verhindert der Stift 9 mit seinen Endbereichen ausserhalb der Steuerhülse 4 eine Verdrehung des Stössels 2 im Gehäuse 1. An beiden axialen Enden der Steuerhülse 4 ist jeweils ein Druckring 11 bzw. 12 für die Aufnahme der im Betrieb auftretenden Axialkräfte angeordnet.

Durch eine Drehung der Steuerhülse 4 wird der Stift 9 und mit ihm der Stössel 2 in der steigenden Nut 7 axial mitgenommen und gleichzeitig durch die Axialnut 8 im Gehäuse 1 daran gehindert, sich mit der Steuerhülse 4 zu drehen. Wenn der Stössel 2 durch eine Drehung der Steuerhülse 4 vom Gehäuse 1 weg bewegt wird und auf ein Hindernis trifft, im Beispiel auf einen Ventilsitz, wirkt eine entgegengesetzte Axialkraft auf die Steuerhülse 4. Diese Kraft wird über den Druckring 11 auf ein Paket von Tellerfedern 16 übertragen, womit im Beispiel die durch den Ventilkegel 3 auf den Ventilsitz ausgeübte Kraft in einem Bereich annähernd konstant gehalten werden kann und toleranz- und/oder wärmebedingte Längenunterschiede der Bauteile ausgeglichen werden. Selbstverständlich ist auf der der Steuerhülse 4 gegenüberliegenden Seite der Tellerfedern 16 ein nicht zeichnerisch dargestelltes Gegenlager vorhanden.

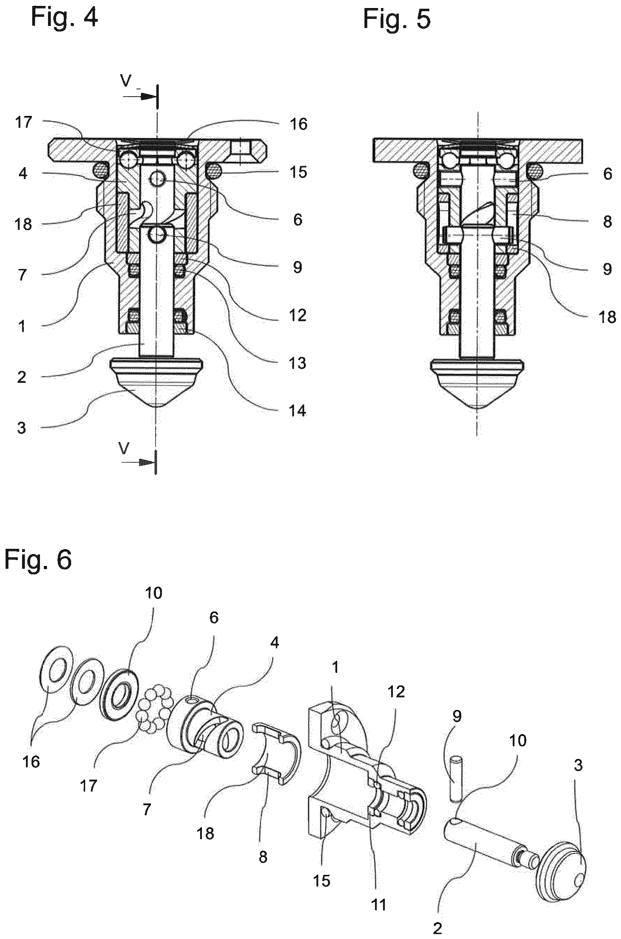

In den Figuren 4 bis 6 ist ein Ausführungsbeispiel eines erfindungsgemässen Stellantriebs dargestellt. Dieses Ausführungsbeispiel unterscheidet sich vom in Figuren 1 bis 3 dargestellten Ausführungsbeispiel insbesondere dadurch, dass die Axialnut 8 nicht direkt im Gehäuse 1 vorhanden ist, sondern in einer zwischen der Steuerhülse 4 und dem Gehäuse 1 angeordneten Führungshülse 18, die vorzugsweise im Gehäuse 1 eingepresst ist. Dadurch ist die Herstellung des Gehäuses 1 vereinfacht. Zur formschlüssigen, drehenden Verbindung mit der im vorangehenden Beispiel genannten, die Steuerhülse 4 drehenden Welle ist in diesem Beispiel in der Steuerhülse 4 eine Bohrung 6 für einen nicht dargestellten Stift vorgesehen. Schliesslich ist zwischen der Steuerhülse 4 und den Tellerfedern 16 ein Axiallager 17 in Form eines Kugellagers anstelle des Druckrings 11 des ersten Ausführungsbeispiels angeordnet.

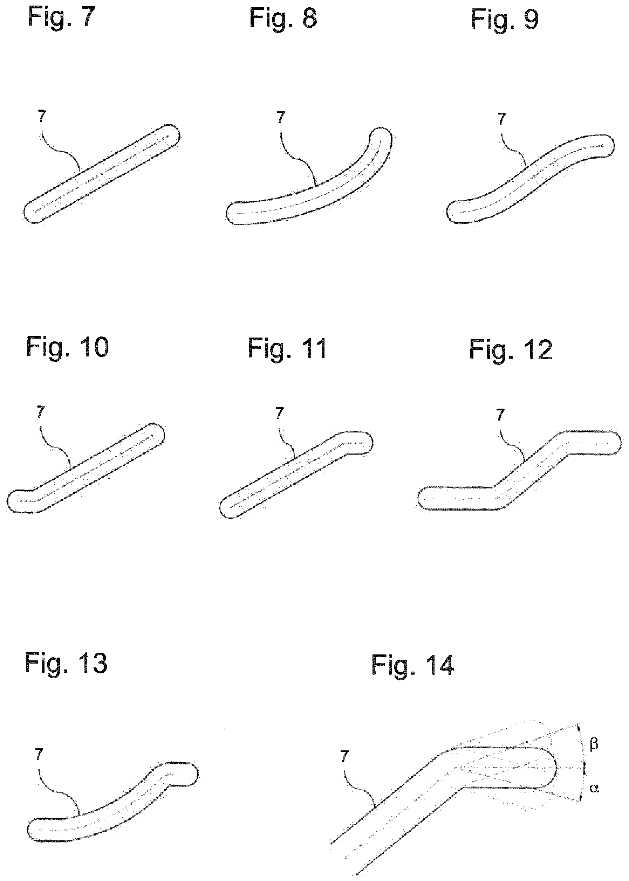

Die Figuren 7 bis 14 zeigen schematisch Abwicklungen der steigenden Nut 7. Die Beispiele der Figuren 7 bis 9 gehören nicht zur Erfindung und dienen nur einem besseren Verständnis. Wie man sieht, sind neben einer konstanten Steigung der Nut 7, wie sie in Figur 7 dargestellt ist, auch variable Steigungen möglich, wie sie rein beispielsweise in den Figuren 8 und 9 dargestellt sind. Die Figuren 10 bis 12 zeigen, dass die Steigung der Nut 7 an deren Enden auch Null betragen kann. Im Beispiel gemäss Figur 12 schliessen an beiden Enden der Nut relativ lange Bereiche ohne Steigung an, wodurch beispielsweise einem mit der Steuerhülse 4 verbundenen Motor in beiden Endlagen des Stellantriebs Gelegenheit zum Auslaufen gegeben wird, ohne dass dabei der Stössel 2 axial bewegt wird. Dies kann besonders bei schnellen Stellbewegungen hilfreich sein und übermässige Belastungen des Stellantriebs vermeiden. Figur 13 illustriert beispielhaft, dass eine kombinierte Form der Nut 7 mit variabler Steigung und steigungslosem Ende möglich ist. Schliesslich ist in Figur 14 ein Ende der Nut 7 ohne Steigung vergrössert dargestellt. Mit unterbrochenen Linien ist dabei gezeigt, dass im Endbereich der Nut 7 auch eine negative Steigung α möglich ist, wodurch in einer Endlage des Stössels 2 eine Art Rastwirkung erzielt und eine ungewollte Axialbewegung des Stössels 2 zuverlässig verhindert werden kann. Mit dem Winkel β ist angedeutet, dass die Steigung der Nut 7 auch sprunghaft variieren und im Endbereich auch in der positiven Richtung von Null abweichen kann.

### Bezugszeichenliste

- 1: Gehäuse
- 2: Stössel
- 3: Ventilkegel
- 4: Steuerhülse
- 5: Fläche
- 6: Bohrung
- 7: steigende Nut
- 8: Axialnut
- 9: Stift
- 10: Bohrung
- 11: Druckring
- 12: Druckring
- 13: Dichtung
- 14: Dichtungsanordnung
- 15: Dichtung
- 16: Tellerfedern
- 17: Axiallager
- 18: Führungshülse

## Patentansprüche

1. Stellantrieb mit einem Gehäuse (1), einem drehbaren Antriebsglied (4) und einem koaxial zum Antriebsglied (4) angeordneten, axial beweglichen Stellglied (2), wobei das Antriebsglied (4) hülsenförmig ausgebildet ist, dass im Antriebsglied (4) mindestens eine mindestens bereichsweise steigende Nut (7) angeordnet ist, dass die Nut (7) die Wandung des Antriebsglieds (4) durchdringt und dass das Stellglied (2) mindestens einen radialen stiftartigen Ansatz (9) hat, der durch die Nut (7) hindurch ragt und mit seinem freien Ende in eine unmittelbar oder mittelbar im Gehäuse (1) angeordnete Axialnut (8) greift, und wobei sich die Steigung der Nut (7) über deren Länge verändert, **dadurch gekennzeichnet, dass** die Axialnut (8) in einer das Antriebsglied (4) umgebenden Hülse (18) angeordnet ist und dass die Steigung der Nut (7) in mindestens einem Endabschnitt der Nut (7) null oder negativ ist.

2. Stellantrieb nach Anspruch 1, **dadurch gekennzeichnet, dass** zwei identische, mindestens bereichsweise steigende Nuten (7) im Antriebsglied (4) vorhanden sind und jeder Nut (7) ein stiftartiger Ansatz (9) zugeordnet ist.

3. Stellantrieb nach einem der vorangehenden Ansprüche, **dadurch gekennzeichnet, dass** der Ansatz als Stift (9) ausgebildet ist, der in einer Bohrung (10) des Stellglieds (2) aufgenommen ist.

4. Stellantrieb nach einem der vorangehenden Ansprüche, **dadurch gekennzeichnet, dass** die Axialnut (8) in einer Wand des Gehäuses (1) angeordnet ist.

5. Stellantrieb nach einem der vorangehenden Ansprüche, **dadurch gekennzeichnet, dass** das Antriebsglied (4) im Gehäuse (1) entgegen der Kraft einer Feder (16) axial verschiebbar ist.

## Claims

1. Actuator with a housing (1), a rotatable drive member (4) and an axially movable control element (2) that is arranged coaxially with the drive member (4), wherein the drive member (4) is sleeve-like, that at least one groove (7), which rises at least in certain regions, is arranged in the drive member (4), that the groove (7) penetrates the wall of the drive member (4), and that the control element (2) has at least one radial pin-like projection (9) that projects through the groove (7) and engages with its free end in an axial groove (8) that is arranged directly or indirectly in the housing (1), and wherein the pitch of the groove (7) varies over its length, **characterized in that** the axial groove (8) is arranged in a sleeve (18) that surrounds the drive member (4), and **in that** the pitch of the groove (7) is zero or negative in at least one end section of the groove (7).

2. Actuator according to Claim 1, **characterized in that** two identical grooves (7) that rise at least in certain regions are provided in the drive member (4) and a pin-like projection (9) is associated with each groove (7).

3. Actuator according to one of the preceding claims, **characterized in that** the projection is configured as a pin (9), which is received in a bore hole (10) of the control element (2).

4. Actuator according to one of the preceding claims, **characterized in that** the axial groove (8) is arranged in a wall of the housing (1).

5. Actuator according to one of the preceding claims, **characterized in that** the drive member (4) is axially displaceable in the housing (1) counter to the force of a spring (16).

## Revendications

1. Mécanisme de commande, comprenant un carter (1), un élément d'entraînement rotatif (4) et un actionneur (2) axialement mobile et disposé coaxialement à l'élément d'entraînement (4), l'élément d'entraînement (4) étant réalisé en forme de douille, au moins une rainure (7) montant au moins par endroits étant disposée dans l'élément d'entraînement (4), la rainure (7) pénétrant la paroi de l'élément d'entraînement (4), et l'actionneur (2) présentant au moins un embout radial (9) en forme de cheville qui fait saillie à travers la rainure (7) et vient en prise par son extrémité libre dans une rainure axiale (8) disposée directement ou indirectement dans le carter (1), et la pente de la rainure (7) variant sur sa longueur,
**caractérisé en ce que** la rainure axiale (8) est disposée dans une douille (18) entourant l'élément d'entraînement (4), et **en ce que** la pente de la rainure (7) est égale à zéro ou est négative dans au moins une partie d'extrémité de la rainure (7).

2. Mécanisme de commande selon la revendication 1, **caractérisé en ce que** deux rainures identiques (7) montant au moins par endroits existent dans l'élément d'entraînement (4) et chaque rainure (7) est associée à un embout (9) en forme de cheville.

3. Mécanisme de commande selon l'une quelconque des revendications précédentes, **caractérisé en ce que** l'embout est réalisé sous la forme d'une cheville (9) qui est reçue dans un alésage (10) de l'actionneur (2).

4. Mécanisme de commande selon l'une quelconque des revendications précédentes, **caractérisé en ce que** la rainure axiale (8) est disposée dans une paroi du carter (1) .

5. Mécanisme de commande selon l'une quelconque des revendications précédentes, **caractérisé en ce que** l'élément d'entraînement (4) dans le carter (1) peut être déplacé axialement à l'encontre de la force d'un ressort (16) .
